# EUROPEAN PATENT APPLICATION

(11) **EP 4 831 831 A1**
(43) Date of publication of application: **28.10.2026**
(21) Application number: 24908423.7
(22) Date of filing: 19.12.2024
(51) Int. Cl.: G06F 16/29, G06F 21/60, H04W 8/18

(54) **METHOD AND APPARATUS FOR DATA PROCESSING, DEVICE, AND STORAGE MEDIUM**

(30) Priority: 21.12.2023 CN 202311773500
(71) Applicant: Lemon Inc., Grand Cayman, KY1-1205 (KY)
(72) Inventor: TAO, Lei, Beijing 100028 (CN)
(74) Representative: Marks & Clerk LLP
(86) International application number: PCT/SG2024/050813
(87) International publication number: WO 2025/136226

(57) **Abstract**

According to the embodiments of the disclosure, a method, an apparatus, a device, and a storage medium for data processing are provided. The method described herein includes: determining whether a target data entry includes a first entity identifier corresponding to a first entity type; determining, in response to the target data entry including the first entity identifier, a first region corresponding to the first entity identifier based on first mapping information, the first mapping information indicating a first mapping relationship between a first set of entity identifiers and a set of preset regions, the first set of entity identifiers corresponding to the first entity type; and associating the target data entry with the first region. Based on this approach, the embodiments of the disclosure may automatically identify the region corresponding to the data entry, thereby supporting region-based data management.

## Description

This application claims priority to Chinese Patent Application No. 202311773500.4, filed on December 21, 2023, and entitled "METHOD, APPARATUS, DEVICE, AND STORAGE MEDIUM FOR DATA PROCESSING", the entire content of which is incorporated herein by reference.

### TECHNICAL FIELD

Various implementations of the present disclosure relate to the field of computers, and in particular to a method, an apparatus, a device, and a computer storage medium for data processing.

### BACKGROUND

With the development of Internet technology, various Internet applications have become an important part of people's lives. Such applications will generate massive amount of data every day, thereby bringing various data security issues such as data sovereignty protection. For example, some countries may prohibit certain types of user data from being sent to overseas servers. Therefore, data attribution recognition is a basic task in data management.

### SUMMARY

In a first aspect of the present disclosure, a method for data processing is provided. The method includes: determining whether a target data entry includes a first entity identifier corresponding to a first entity type; determining, in response to the target data entry including the first entity identifier, a first region corresponding to the first entity identifier based on first mapping information, the first mapping information indicating a first mapping relationship between a first set of entity identifiers and a set of preset regions, the first set of entity identifiers corresponding to the first entity type; and associating the target data entry with the first region.

In a second aspect of the present disclosure, an apparatus for data processing is provided. The apparatus includes: a first determining module configured to determine whether a target data entry includes a first entity identifier corresponding to a first entity type; a second determining module configured to determine, in response to the target data entry including the first entity identifier, a first region corresponding to the first entity identifier based on first mapping information, the first mapping information indicating a first mapping relationship between a first set of entity identifiers and a set of preset regions, the first set of entity identifiers corresponding to the first entity type; and a data associating module configured to associate the target data entry with the first region.

In a third aspect of the present disclosure, an electronic device is provided. The device includes: a memory and a processor; the memory is used to store one or more computer instructions, and the one or more computer instructions are executed by the processor to implement the method of the first aspect.

In a fourth aspect of the present disclosure, a computer-readable storage medium is provided, storing one or more computer instructions thereon, wherein the one or more computer instructions are executed by a processor to implement the method of the first aspect.

### BRIEF DESCRIPTION OF THE DRAWINGS

The above and other features, advantages and aspects of the embodiments of the present disclosure will become more apparent in conjunction with the accompanying drawings and with reference to the following detailed description. In the drawings, the same or similar reference numbers refer to the same or similar elements, wherein:
FIG. 1 illustrates a schematic block diagram of a system for data processing according to some embodiments of the present disclosure;
FIG. 2A and FIG. 2B illustrate flowcharts of an example process for data processing according to some embodiments of the present disclosure;
FIG. 3 illustrates an example block diagram of an apparatus for data processing according to some embodiments of the present disclosure; and
FIG. 4 illustrates a block diagram of an example device that may be used to implement embodiments of the present disclosure.

### DETAILED DESCRIPTION OF EMBODIMENTS

Embodiments of the present disclosure will be described in more detail below with reference to the accompanying drawings. While certain embodiments of the present disclosure are illustrated in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only, and are not intended to limit the protection scope of the present disclosure.

In the description of the embodiments of the present disclosure, the terms "including/comprising" and the like should be understood to be open-ended inclusions, that is, "including/comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, performing a step "in response to A" does not mean that this step is performed immediately after "A", but there may be one or more intermediate steps.

It may be understood that the data involved in the technical solution (including but not limited to the data itself, acquisition, use, storage or deletion of the data) should comply with requirements of corresponding laws, regulations and related provisions.

It may be understood that before the technical solutions disclosed in the embodiments of the present disclosure are used, the relevant users should be informed of the type, the scope of use, use scenarios and the like of information involved in the present disclosure in an appropriate manner and the authorization of the relevant users should be obtained according to relevant laws and regulations, where the relevant users may include any type of subject of rights, such as individuals, enterprises, groups.

It may be understood that the above process of notifying and obtaining user authorization is only illustrative, and does not limit the implementations of the present disclosure. Other methods that satisfies relevant laws and regulations may also be applied to the implementations of the present disclosure.

As mentioned above, various Internet applications will generate massive amount of data every day, thereby bringing various data security issues such as data sovereignty protection. For example, some countries may prohibit certain types of user data from being sent to overseas servers. Therefore, data attribution recognition is a basic task in data management.

According to the embodiments of the present disclosure, a solution for data processing is provided. According to the solution, it may be determined whether a target data entry includes a first entity identifier corresponding to a first entity type. Further, in response to the target data entry including the first entity identifier, a first region corresponding to the first entity identifier is determined based on first mapping information, the first mapping information indicating a first mapping relationship between a first set of entity identifiers and a set of preset regions, the first set of entity identifiers corresponding to the first entity type. Accordingly, the target data entry may be associated with the first region.

Based on this approach, the embodiments of the present disclosure can automatically identify the region corresponding to the data entry, thereby supporting region-based data management.

The basic principles and several example implementations of the present disclosure are described below with reference to the drawings.

### Example Environment

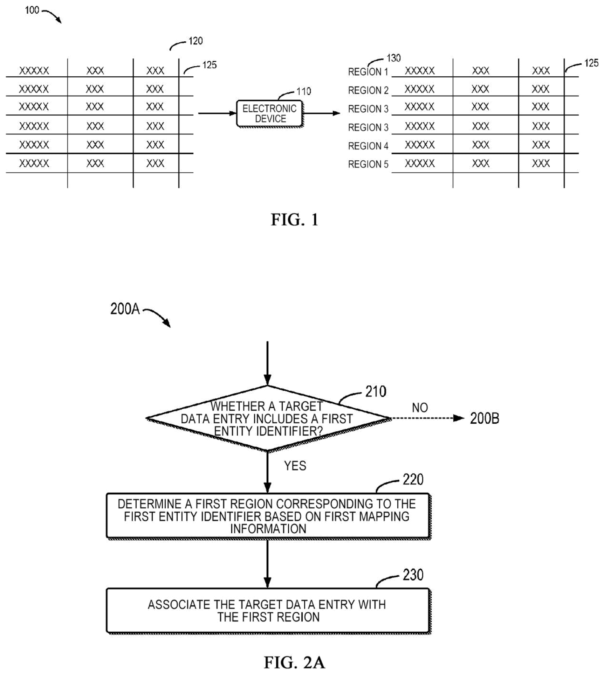

FIG. 1 illustrates a schematic diagram of an example environment 100 in which the embodiments of the present disclosure may be implemented. As shown in FIG. 1, the example environment 100 may include an electronic device 110.

In this example environment 100, the electronic device 110 may obtain a dataset 120. Such dataset 120 may include a plurality of data entries 125, also referred to as a row of data.

In some embodiments, the dataset 120 may be generated, for example, based on an operation of a user in an application. For example, taking comment data as an example, after the user submits a comment in the application, the application may generate a corresponding data entry to correspond to the comment submitted by the user.

In some embodiments, such data entry 125 may include a plurality of data segments, and each data segment may correspond to different types of data content, for example. For example, the data entry 125 may be organized based on a plurality of preset fields, and each data segment may be associated with a corresponding field. Continuing with the comment data as an example, such field may include, for example, an identifier of the comment, an identifier of the user who submitted the comment, a submission time of the comment, and the like.

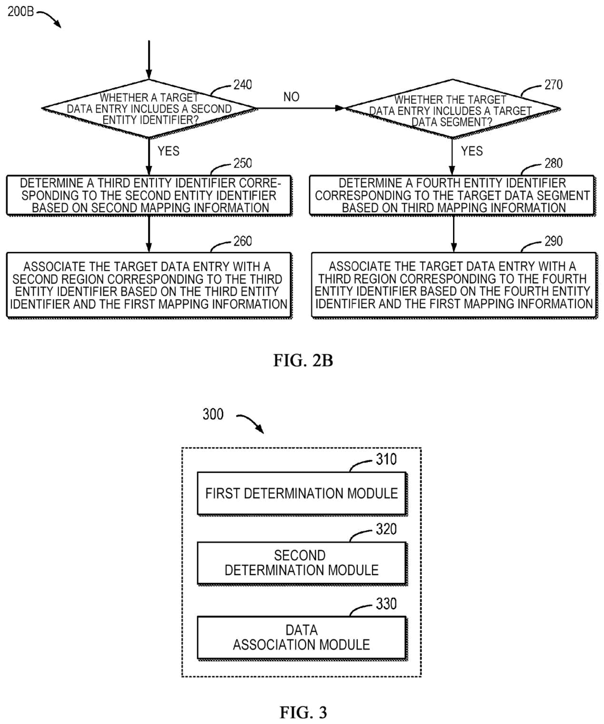

As will be discussed in detail below with reference to Fig. 2A and Fig. 2B, the electronic device 110 may determine a region 130 corresponding to each data entry 125 in the dataset 120, thereby supporting region-based management or processing the data in the dataset 120.

The process of determining the region corresponding to the data entry will be described in detail below. **Data Processing Process**

FIG. 2A illustrates a flowchart of an example data processing process 200A according to some embodiments of the present disclosure. The process 200A may be implemented at the electronic device 110 shown in FIG. 1. The process 200A is described below with reference to FIG. 1.

At block 210, the electronic device 110 determines whether a target data entry includes a first entity identifier corresponding to a first entity type.

Taking the data entry 125 in FIG. 1 as an example, the electronic device 110 may determine whether the data entry 125 includes an entity identifier corresponding to a specific entity type. In some embodiments, such specific entity type may correspond to a unique region.

In some embodiments, the first entity type may correspond to a user entity, and the first entity identifier includes a user identifier of the user entity. For example, the electronic device 110 may determine whether the data entry 125 includes the user identifier.

Continuing to refer to FIG. 2, in response to the target data entry including the first entity identifier, the process 200A proceeds to block 220. Specifically, the electronic device 110 determines a first region corresponding to the first entity identifier based on first mapping information. The first mapping information indicates a first mapping relationship between a first set of entity identifiers and a set of preset regions, and the first set of entity identifiers corresponds to the first entity type.

Continuing with the user identifier as an example, if the data entry 125 includes a user identifier, the electronic device 110 may determine a region corresponding to the user identifier based on pre-constructed mapping information.

In some embodiments, the first mapping relationship may be constructed based on the region where the user is located or the region to which the user belongs. For example, the first mapping relationship may be represented as <user identifier, region>.

At block 230, the electronic device 110 associates the target data entry with the first region. Further, the electronic device 110 may construct an association between the data entry 125 and the region corresponding to the first entity identifier to support region-based management or processing of the data entry 125.

Continuing to refer to FIG. 2A, if it is determined at the block 210 that the target data entry does not include the first entity identifier, the process 200A may proceed to a process 200B shown in FIG. 2B.

Specifically, as shown in FIG. 2B, at block 240, the electronic device 110 may determine whether the target data entry includes a second entity identifier corresponding to a second entity type.

Different from the first entity type, the second entity type may be an appropriate entity type that may be used to determine the corresponding first entity type. For example, the first entity type may be a user entity, and the second entity type may be, for example, a comment entity. The electronic device 110 may determine a unique user entity that posts the comment based on the comment entity.

If it is determined at block 240 that the target data entry includes the second entity identifier, the process 200B may proceed to block 250. At block 250, the electronic device 110 may determine a third entity identifier corresponding to the second entity identifier based on second mapping information. In some embodiments, the third entity identifier corresponds to the first entity type, the second mapping information indicates a second mapping relationship between a second set of entity identifiers corresponding to the second entity type and a third set of entity identifiers corresponding to the first entity type.

Taking the comment entity and the user entity as an example, the second mapping information may be represented as <comment identifier, user identifier>, and the electronic device 110 may determine the identifier of the user entity corresponding to the comment entity based on the identifier of the comment entity included in the data entry 125.

In some embodiments, the electronic device 110 may construct the second mapping information based on, for example, the following process. The electronic device 110 may determine a mapping relationship between a candidate entity type and the first entity type. Further, in response to the mapping relationship being a many-to-one mapping or a one-to-one mapping, the electronic device 110 may construct second mapping information between the candidate entity type and the first entity type.

That is, the electronic device 110 may determine another entity type for which there is a many-to-one mapping or a one-to-one mapping with the first entity type, and construct a corresponding mapping relationship accordingly. On the contrary, for other entity types for which there is a many-to-many mapping relationship with the first entity type, the electronic device 110 may not perform processing.

For example, taking the user entity as an example of the first entity type, the relationship between a follower entity and the user entity is a many-to-many mapping. That is, one follower entity may follow a plurality of user entities, and one user entity may be associated with a plurality of follower entities. In this case, the follower entity is not suitable for use as the second entity type.

Further, at block 260, the electronic device 110 associates the target data entry with a second region corresponding to the third entity identifier based on the third entity identifier and the first mapping information.

Continuing with the user identifier as an example, if the data entry 125 includes a user identifier, the electronic device 110 may determine a region corresponding to the user identifier based on pre-constructed mapping information, and may associate the data entry 125 with the region to support region-based management or processing of the data entry 125.

Continuing to refer to FIG. 2B, if it is determined at block 240 that the target data entry excludes the second entity identifier, the process 200B may proceed to block 270. At block 270, the electronic device 110 may determine whether the target data entry includes a target data segment that satisfies a preset requirement.

Further, if it is determined at block 270 that the target data entry includes the target data segment, the process 200B may proceed to block 280. At block 280, the electronic device 110 may determine a fourth entity identifier corresponding to the target data segment based on third mapping information. In some embodiments, the fourth entity identifier corresponds to the first entity type, the third mapping information indicates a second mapping relationship between a set of data segments and a fourth set of entity identifiers, and the fourth set of entity identifiers corresponds to the first entity type.

Taking the user entity as an example of the first entity, the target data segment may be data that is able to be used to uniquely determine the corresponding user entity, for example. For example, the target data segment may be a personal information identifier of the user entity.

In some embodiments, for example, the electronic device 110 may extract the target data segment based on a format requirement corresponding to a preset information type of the user entity. For example, such format requirements may include format requirements for specific personal information identifiers.

The electronic device 110 may pre-construct a mapping relationship between a set of data segments and user identifiers, which may be represented as <data segment, user identifier>, for example. Therefore, the electronic device 110 may determine the user entity corresponding to the data entry based on the data segment extracted from the data entry 125.

Further, at block 280, the electronic device 110 may associate the target data entry with a third region corresponding to the fourth entity identifier based on the fourth entity identifier and the first mapping information.

Continuing with the user identifier as an example, if the data entry 125 includes a user identifier, the electronic device 110 may determine a region corresponding to the user identifier based on pre-constructed mapping information, and may associate the data entry 125 with the region to support region-based management or processing of the data entry125.

In some embodiments, after associating the data entry 125 with the corresponding region, the electronic device 110 may further perform, based on the target data being associated with the corresponding region, a data processing operation corresponding to the corresponding region on the target data entry.

In some embodiments, the electronic device 110 may delete at least part of content in the target data entry. For example, in the case where a specific type of data is not allowed to be stored in a certain region, the electronic device 110 may perform a corresponding operation on the data entry that is associated with the region, for example, to delete the specific type of data from the data entry.

In some embodiments, the electronic device 110 may further modify at least part of the content in the target data entry. For example, in the case where a specific type of data needs to be anonymized in certain regions, the electronic device 110 may perform a corresponding operation on the data entry that is associated with the region, for example, to anonymize specific content in the data entry.

The embodiments of the present disclosure may automatically identify the region corresponding to the data entry, thereby supporting region-based data management and improving the efficiency of data management.

### Example Apparatus and Device

The embodiments of the present disclosure further provide a corresponding apparatus for implementing the above method or process. FIG. 3 illustrates a schematic structural block diagram of an apparatus 300 for data processing according to some embodiments of the present disclosure. The apparatus 300 may be implemented or included in the electronic device 110. Each module/component in the apparatus 300 may be implemented by hardware, software, firmware, or any combination thereof.

As shown in FIG. 3, the apparatus 300 includes a first determining module 310 configured to determine whether a target data entry includes a first entity identifier corresponding to a first entity type; a second determining module 320 configured to, in response to the target data entry including the first entity identifier, determine a first region corresponding to the first entity identifier based on first mapping information, the first mapping information indicating a first mapping relationship between a first set of entity identifiers and a set of preset regions, the first set of entity identifiers corresponding to the first entity type; and a data associating module 330 configured to associate the target data entry with the first region.

In some embodiments, the first entity type corresponds to a user entity, and the first entity identifier includes a user identifier of the user entity.

In some embodiments, the apparatus 300 further includes a first processing module configured to: determine whether the target data entry includes a second entity identifier corresponding to a second entity type in response to the target data entry including the first entity identifier; determine a third entity identifier corresponding to the second entity identifier based on second mapping information in response to the target data entry including the second entity identifier, the third entity identifier corresponding to the first entity type, the second mapping information indicating a second mapping relationship between a second set of entity identifiers corresponding to the second entity type and a third set of entity identifiers corresponding to the first entity type; and associate the target data entry with a second region corresponding to the third entity identifier based on the third entity identifier and the first mapping information.

In some embodiments, the second mapping information is constructed based on: determining a mapping relationship between a candidate entity type and the first entity type; and constructing second mapping information between the candidate entity type and the first entity type in response to the mapping relationship being a many-to-one mapping or a one-to-one mapping.

In some embodiments, the apparatus 300 further includes a second processing module configured to: determine, in response to the target data entry excluding the second entity identifier, whether the target data entry includes a target data segment that satisfies a preset requirement; determine, in response to the target data entry including the target data segment, a fourth entity identifier corresponding to the target data segment based on third mapping information, the fourth entity identifier corresponding to the first entity type, the third mapping information indicating a second mapping relationship between a set of data segments and a fourth set of entity identifiers, the fourth set of entity identifiers corresponding to the first entity type; and associate the target data entry with a third region corresponding to the fourth entity identifier based on the fourth entity identifier and the first mapping information.

In some embodiments, the preset requirement indicates a format requirement corresponding to a preset information type of the user entity.

In some embodiments, the apparatus 300 further includes a third processing module configured to perform, on the target data entry, a data processing operation corresponding to the first region.

In some embodiments, the data processing operation includes at least one of: deleting at least part of content in the target data entry; and modifying at least part of the content in the target data entry.

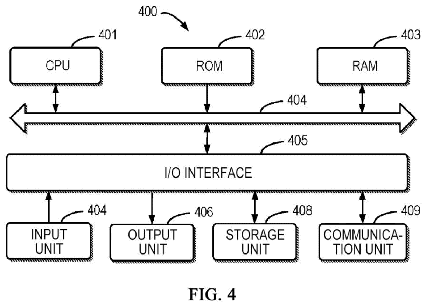

FIG. 4 illustrates a schematic block diagram of an example device 400 that may be used to implement embodiments of the present disclosure. For example, the electronic device 110 according to the embodiments of the present disclosure may be implemented by the device 400. As shown in the drawings, the device 400 includes a central processing unit (CPU) 401, which may perform various appropriate actions and processing based on computer program instructions stored in a read-only memory (ROM) 402 or computer program instructions loaded from a storage unit 408 into a random access memory (RAM) 403. The RAM 403 may further store various programs and data required for operations of the device 400. The CPU 401, the ROM 402, and the RAM 403 are connected to each other through a bus 404. An input/output (I/O) interface 405 is also connected to the bus 404.

A plurality of components in the device 400 are connected to the I/O interface 405, and the components include: an input unit 406, such as a keyboard, a mouse, and the like; an output unit 407, such as various types of displays, speakers, and the like; a storage unit 408, such as a magnetic disk, an optical disc, and the like; and a communication unit 409, such as a network card, a modem, a wireless communication transceiver, and the like. The communication unit 409 allows the device 400 to exchange information/data with other devices through a computer network (such as the Internet) and/or various telecommunication networks.

Each process and processing described above, such as the process 200A and/or the process 200B, may be executed by a processing unit 401. For example, in some embodiments, the process 200A and/or the process 200B may be implemented as a computer software program which is tangibly included in a machine-readable medium, such as the storage unit 408. In some embodiments, part or all of the computer program may be loaded and/or installed into the device 400 via the ROM 402 and/or the communication unit 409. When the computer program is loaded into the RAM 403 and executed by the CPU 401, one or more actions of the process 200A and/or the process 200B described above may be executed.

The present disclosure may be a method, an apparatus, a system, and/or a computer program product. The computer program product may include a computer-readable storage medium having computer-readable program instructions thereon for performing various aspects of the present disclosure.

The computer-readable storage medium may be a tangible device that may hold and store instructions used by an instruction execution device. The computer-readable storage medium may be, for example, but not limited to, an electrical storage device, a magnetic storage device, an optical storage device, an electromagnetic storage device, a semiconductor storage device, or any suitable combination of the above. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanically encoded device such as a punch card or a raised structure in a groove with instructions stored thereon, and any suitable combination of the above. The computer-readable storage medium used herein is not interpreted as an instantaneous signal itself, such as a radio wave or other freely propagating electromagnetic waves, electromagnetic waves propagating through a waveguide or other transmission media (e.g., light pulses through an optical fiber cable), or electrical signals transmitted through wires.

The computer-readable program instructions described herein may be downloaded from the computer-readable storage medium to various computing/processing devices, or downloaded to an external computer or an external storage device through a network, such as the Internet, a local area network, a wide area network, and/or a wireless network. The network may include a copper transmission cable, an optical fiber transmission, a wireless transmission, a router, a firewall, a switch, a gateway computer, and/or an edge server. A network adapter card or a network interface in each computing/processing device receives the computer-readable program instructions from the network, and forwards the computer-readable program instructions for storage in the computer-readable storage medium in each computing/processing device.

The computer program instructions for performing the operations of the present disclosure may be assembly instructions, instruction set architecture (ISA) instructions, machine instructions, machine-related instructions, microcode, firmware instructions, state setting data, or source codes or object codes written in any combination of one or more programming languages, the programming languages including object-oriented programming languages, such as Smalltalk, C++, and the like, and conventional procedural programming languages, such as "C" language or similar programming languages. The computer-readable program instructions may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local area network (LAN) or a wide area network (WAN), or it may be connected to an external computer (e.g., connected by using the Internet provided by an Internet service provider). In some embodiments, an electronic circuit such as a programmable logic circuit, a field programmable gate array (FPGA) or a programmable logic array (PLA) is customized by using state information of the computer-readable program instructions, the electronic circuit may execute the computer-readable program instructions, thereby implementing various aspects of the present disclosure.

Various aspects of the present disclosure are described herein with reference to flowcharts and/or block diagrams of the method, the apparatus (system) and the computer program product according to the embodiments of the present disclosure. It should be understood that each block of the flowcharts and/or block diagrams and combinations of the blocks in the flowcharts and/or block diagrams may be implemented by the computer-readable program instructions.

These computer-readable program instructions may be provided to a processing unit of a general-purpose computer, a special-purpose computer, or other programmable data processing apparatus to produce a machine, so that these instructions, when executed by the processing unit of the computer or other programmable data processing apparatus, produce an apparatus for implementing functions/actions specified in one or more blocks of the flowcharts and/or block diagrams. These computer-readable program instructions may also be stored in the computer-readable storage medium, these instructions make the computer, the programmable data processing apparatus, and/or other devices work in a specific manner, and thus, the computer-readable medium storing the instructions includes a manufactured product, which includes instructions for implementing various aspects of the functions/actions specified in one or more blocks of the flowcharts and/or block diagrams.

The computer-readable program instructions may also be loaded onto the computer, other programmable data processing apparatus, or other devices, so that a series of operation steps are performed on the computer, other programmable data processing apparatus, or other devices to produce a computer-implemented process, thereby enabling the instructions executed on the computer, other programmable data processing apparatus, or other devices to implement the functions/actions specified in one or more blocks of the flowcharts and/or block diagrams.

The flowcharts and block diagrams in the drawings show the possibly implemented architectures, functions and operations of the system, the method and the computer program product according to a plurality of embodiments of the present disclosure. In this regard, each block in the flowchart or block diagram may represent part of one module, a program segment or instructions, and the part of the module, program segment or instructions includes one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts and the combination of the blocks in the block diagrams and/or flowcharts may be implemented by a special-purpose hardware-based system that executes specified functions or actions, or may be implemented by a combination of special-purpose hardware and computer instructions.

The implementations of the present disclosure have been described above, and the above description is illustrative, non-exhaustive, and is not limited to the disclosed implementations. Without departing from the scope and spirit of the illustrated implementations, many modifications and changes will be apparent to those of ordinary skill in the art. The terms used herein are selected to best explain the principles and actual applications of each implementation or improvements of the technologies in the market, or to enable other ordinary skilled in the art to understand the implementations disclosed herein.

## Claims

1. A method for data processing, comprising:
determining whether a target data entry comprises a first entity identifier corresponding to a first entity type;
determining, in response to the target data entry comprising the first entity identifier, a first region corresponding to the first entity identifier based on first mapping information, the first mapping information indicating a first mapping relationship between a first set of entity identifiers and a set of preset regions, the first set of entity identifiers corresponding to the first entity type; and
associating the target data entry with the first region.

2. The method of claim 1, wherein the first entity type corresponds to a user entity, and the first entity identifier comprises a user identifier of the user entity.

3. The method of claim 1, further comprising:
determining, in response to the target data entry comprising the first entity identifier, whether the target data entry comprises a second entity identifier corresponding to a second entity type;
determining, in response to the target data entry comprising the second entity identifier, a third entity identifier corresponding to the second entity identifier based on second mapping information, the third entity identifier corresponding to the first entity type, the second mapping information indicating a second mapping relationship between a second set of entity identifiers corresponding to the second entity type and a third set of entity identifiers corresponding to the first entity type; and
associating the target data entry with a second region corresponding to the third entity identifier based on the third entity identifier and the first mapping information.

4. The method of claim 3, wherein the second mapping information is constructed based on:
determining a mapping relationship between a candidate entity type and the first entity type; and
constructing, in response to the mapping relationship being a many-to-one mapping or a one-to-one mapping, the second mapping information between the candidate entity type and the first entity type.

5. The method of claim 3, further comprising:
determining, in response to the target data entry excluding the second entity identifier, whether the target data entry comprises a target data segment that satisfies a preset requirement;
determining, in response to the target data entry comprising the target data segment, a fourth entity identifier corresponding to the target data segment based on third mapping information, the fourth entity identifier corresponding to the first entity type, the third mapping information indicating a second mapping relationship between a set of data segments and a fourth set of entity identifiers, the fourth set of entity identifiers corresponding to the first entity type; and
associating the target data entry with a third region corresponding to the fourth entity identifier based on the fourth entity identifier and the first mapping information.

6. The method of claim 5, wherein the preset requirement indicates a format requirement corresponding to a preset information type of a user entity.

7. The method of claim 1, further comprising:
performing, on the target data entry, a data processing operation corresponding to the first region.

8. The method of claim 7, wherein the data processing operation comprises at least one of:
deleting at least part of content in the target data entry; or
modifying at least part of content in the target data entry.

9. An apparatus for data processing, comprising:
a first determining module configured to determine whether a target data entry comprises a first entity identifier corresponding to a first entity type;
a second determining module configured to determine, in response to the target data entry comprising the first entity identifier, a first region corresponding to the first entity identifier based on first mapping information, the first mapping information indicating a first mapping relationship between a first set of entity identifiers and a set of preset regions, the first set of entity identifiers corresponding to the first entity type; and
a data associating module configured to associate the target data entry with the first region.

10. An electronic device, comprising:
a memory and a processor;
wherein the memory is used to store one or more computer instructions, and the one or more computer instructions are executed by the processor to implement the method of any of claims 1 to 9.

11. A computer-readable storage medium storing one or more computer instructions thereon, wherein the one or more computer instructions are executed by a processor to implement the method of any of claims 1 to 9.
